# EUROPÄISCHE PATENTSCHRIFT

(11) **EP 1 084 742 B1**
(45) Veröffentlichungstag und Bekanntmachung des Hinweises auf die Patenterteilung: **17.12.2003**
(21) Anmeldenummer: 00109661.9
(22) Anmeldetag: 06.05.2000
(51) Int. Cl.: B01D 25/12, B01D 35/143

(54) **Leckagemelder für die Filterelemente einer Filterpresse**
Alerting device for leakage for filter press filtering elements
Dispositif d'alerte en cas de fuite dans des éléments filtrants d'une presse filtrante

(30) Priorität: 18.09.1999 DE 29916427 U
(43) Veröffentlichungstag der Anmeldung: 21.03.2001
(73) Patentinhaber: Lenser Filtration GmbH & Co., 89250 Senden (DE)
(72) Erfinder: Wildner, Gerhard, 89278 Nersingen (DE)
(74) Vertreter: Dziewior, Joachim

(56) Entgegenhaltungen:
- US-A- 4 844 803

## Beschreibung

Die Erfindung betrifft einen Leckagemelder für Filterelemente einer Filterpresse, bei der mehrere randseitig zusammengespannte, aus einer Stützwand mit einem umlaufenden Plattenrahmen bestehende Filterelemente zwischen sich Filterkammern mit darin mündenden Einläufen für die zu filtrierende Suspension bilden und ein- oder beidseitig im Randbereich dicht mit dem Filterelement verbundene, durch ein Druckmittel in die Filterkammer vorbewegbare Preßmembranen tragen, wobei das Druckmittel über eine randseitig in dem Filterelement mündende Druckmittelbohrung zu- bzw. abgeführt wird.

Bei der Filtration von Suspensionen in derartigen Filterpressen schließt sich an die Filtrationsphase eine Nachpressphase an, bei welcher der in den Filterkammern aufgebaute Filterkuchen unter dem Druck der Pressmembran weitestgehend von der noch enthaltenen Restflüssigkeit befreit wird.

Beim Auftreten einer Leckage tritt das Pressmedium in der Regel in den Filterkuchenraum ein und verläßt die Filterpresse zusammen mit dem Filtrat aus dem Filterkuchen. Dieser Austritt des Druckmittels ist auf direktem Wege nicht erkennbar und läßt sich ausschließlich durch den Verlust an Druckmittel feststellen.

Da die beweglichen Pressmembranteile üblicherweise durch Filtertücher überdeckt sind, wird ein Auffinden von Leckagen an den Membranteilen weiter erschwert und gestaltet sich in der Praxis als sehr zeitaufwendig. Damit sind solche Leckagen darüber hinaus störend für den Produktionsprozeß.

Der Erfindung liegt die Aufgabe zugrunde, einen Leckagemelder zu schaffen, der es erlaubt, eine Lokalisierung derartiger Leckagen hinsichtlich des einzelnen Filterelementes zu ermöglichen.

Ein diese Aufgabe lösender Leckagemelder ist gekennzeichnet durch einen in die Anschlußbohrung einzusetzenden Strömungssensor mit einem Laufrad, dessen von dem zu- oder abströmenden Druckmittel verursachte Drehbewegung visuell oder durch optische, induktive oder dergleichen Sensoren überwacht werden kann.

Der durch die Erfindung erreichte Vorteil besteht im wesentlichen in der Ausnutzung der Tatsache, daß beim Füllvorgang intakter Preßmembranteile der Füllstrom bei Erreichen des maximalen Fülldruckes zum Stillstand kommt, da die Preßmembran am Filterkuchen zur Anlage kommt und damit kein weiteres Druckmittel mehr nachströmt.

Eine erste vorteilhafte und daher im Rahmen der Erfindung bevorzugte Ausführungsform ist dadurch gekennzeichnet, daß der Strömungssensor von einem Hülsenteil gebildet ist, dessen axial eines Ende zum Anschluß an die Druckmittelbohrung und dessen anderes Ende zum Anschluß einer Druckmittelleitung ausgebildet ist, wobei beide Enden axial verlaufende Sacklochbohrungen aufweisen, an deren Enden jeweils wenigstens eine radial verlaufende, in eine Strömungskammer mündende Querbohrung vorgesehen ist, und wobei auf der Außenmantelfläche des Hülsenteils das Laufrad angeordnet ist, das im wesentlichen hohlzylindrisch ausgebildet, dabei mit schräg sich durch die Wandung verlaufenden Strömungsöffnungen versehen ist und die Querbohrungen eines der beiden Sacklochbohrungen umschließt.

Diese Ausgestaltung des Strömungssensors ermöglicht es, ohne großen Aufwand eine Nachrüstung auch an bereits vorhandenen Filterelementen vorzunehmen, da der Strömungssensor lediglich zwischen dem Filterelement und der an sie angeschlossenen Druckmittelleitung zwischengeschaltet wird. Dabei besteht darüber hinaus die Möglichkeit, bedarfsweise den Strömungssensor ohne Laufrad zu installieren, sofern eine Überwachung auf Leckagen augenblicklich nicht gewünscht wird. Es ist dann lediglich erforderlich, zu gegebener Zeit eine Nachinstallation des Laufrades vorzunehmen.

Bei einer zweiten vorteilhaften Ausführungsform ist der Strömungssensor von einem Hülsenteil gebildet, dessen axial eines Ende zum Anschluß an die Druckmittelbohrung und dessen anderes Ende geschlossen ausgebildet ist, wobei am geschlossenen Ende wenigstens eine radial verlaufende, die Strömungskammer mit dem Hülseninnenraum verbindende Querbohrung vorgesehen ist und die Strömungskammer über einen entlang der Außenmantelfläche des Hülsenteils sich erstreckenden Ringkanal mit einem senkrecht zum Filterelement verlaufenden Druckmittelkanal in Verbindung steht, und wobei auf der Außenmantelfläche des Hülsenteils das Laufrad angeordnet ist, das im wesentlichen hohlzylindrisch ausgebildet, dabei mit schräg sich durch die Wandung erstreckenden Strömungsöffnungen versehen ist und die Querbohrungen umschließt. Bei dieser Ausgestaltung kann der Strömungssensor auch bei solchen Filterpressen eingesetzt werden, bei denen das Druckmittel für alle Filterkammern über einen gemeinsamen, sich durch alle Filterelemente erstreckenden Druckmittelkanal eingespeist wird.

Als günstig in diesem Zusammenhang hat es sich erwiesen, wenn jeweils vier Querbohrungen im Hülsenteil vorgesehen sind. Generell ist dabei zu beachten, daß die Querschnitte des Strömungssensors so dimensioniert sind, daß diese jeweils dem Zuflußquerschnitt entsprechen, so daß insgesamt keine Stauwirkung eintritt. Somit ist sichergestellt, daß die Füllgeschwindigkeit bzw. die Füllzeit nicht beeinträchtigt wird.

In weiterer bevorzugter Ausgestaltung der Erfindung sind die Strömungsöffnungen in der den anderen Querbohrungen zugewandten Stirnfläche des Laufrades vorgesehen. Es besteht jedoch ebenso auch die Möglichkeit, daß die Strömungsöffnungen in der Mantelfläche des Laufrades vorgesehen sind.

Weiter hat es sich als günstig herausgestellt, wenn die Strömungsöffnungen sich unter einem Winkel von etwa 45° zur Wandung des Laufrades erstrecken. Hierdurch wird ein ausreichender Antrieb des Laufrades erreicht, ohne den Durchfluß des Druckmittels zu beeinträchtigen.

Die Strömungskammer ist zweckmäßigerweise von einem Ringflansch gebildet, der sich einerseits gegen eine Ringschulter des Hülsenteils und andererseits gegen die Stirnfläche des Rahmens des Filterelements dichtend abstützt. Hierbei besteht auch die Möglichkeit, daß der Rahmen des Filterelements ein zur Druckmittelbohrung konzentrisches Sackloch aufweist, das gemeinsam mit dem Ringflansch die Strömungskammer bildet. Auf diese Weise wird eine besonders geringe Bauhöhe des Strömungssensors erreicht.

Um eine unmittelbare visuelle Beobachtung zu ermöglichen, ist es von Vorteil, wenn die Mantelfläche des Ringflansches transparent ausgebildet ist und das Laufrad an seiner Außenmantelfläche eine farbliche Markierung aufweist.

Da die Drehzahl des Laufrades relativ hoch sein kann, ist es zweckmäßig, wenn die farbliche Markierung die Form einer Schraubenlinie aufweist. Diese Schraubenlinie kann beispielsweise als Doppelwindung ausgebildet sein, so daß sich die Drehbewegung für den Betrachter als laufender Gewindegang zum Membranfilterelement hin darstellt.

Entsprechend führt eine Entleerung der Druckkammer zum entgegengesetzten Drehsinn.

Das Laufrad wird in axialer Richtung zweckmäßigerweise von dem Ringflansch einerseits und einem in einer Ringnut des Hülsenteils angeordneten Sicherungsring andererseits abgestützt.

Sofern eine automatische Überwachung - gegebenenfalls auch nur zusätzlich - gewünscht wird, kann das Laufrad mit Metallstreifen zur induktiven Erfassung der Drehbewegung besetzt sein. Ebenso kann die Drehbewegung jedoch auch auf jede andere übliche Weise erfaßt werden.

Im folgenden wird die Erfindung an einem in der Zeichnung dargestellten Ausführungsbeispiel näher erläutert; es zeigen:
- Fig.1: einen Querschnitt durch den den Leckagemelder bildenden Strömungssensor in einer ersten Ausführungsform,
- Fig.2: eine weitere Ausführungsform des Leckagemelders in der Fig. 1 entsprechender Darstellung.

In der Zeichnung ist lediglich ein Filterelement einer Filterpresse schematisch angedeutet, nämlich der Randbereich des Filterelements.

Solche Filterpressen bestehen aus einer Vielzahl von randseitig zusammengespannten Filterelementen, wobei jedes Filterelement eine Stützwand sowie einen umlaufenden Plattenrahmen 1 aufweist. Diese Filterelemente bilden zwischen sich Filterkammern mit darin mündenden Einläufen für die zu filtrierende Suspension. Weiter sind diese Filterelemente ein- oder beidseitig mit Preßmembranen versehen, die im Randbereich dicht mit dem Filterelement verbunden und durch ein Druckmittel in die Filterkammer vorbewegbar sind. Dadurch besteht die Möglichkeit, im Anschluß an den Filtrationsvorgang den in der Filterkammer aufgebauten Filterkuchen nachzupressen. Das hierzu dienende Druckmittel wird über eine randseitig in dem Filterelement mündende Druckmittelbohrung zu- bzw. abgeführt. Beispielhaft für einen derartigen Aufbau sei die DE 32 20 487 genannt.

Sofern unter der oftmals recht hohen Belastung der Membranen eine Leckage auftritt, kann das Druckmittel in die Filterkammer selbst gelangen und fließt somit gemeinsam mit dem Filtrat ab. Hierdurch besteht in der Regel keine Möglichkeit, eine derartige Leckage von außen festzustellen.

Es wird daher erfindungsgemäß in die Anschlußbohrung 2 des Filterelementes ein Strömungssensor 3 mit einem Laufrad 4 eingesetzt, das von dem zu- oder abströmenden Druckmittel in eine Drehbewegung versetzt wird. Diese Drehbewegung läßt sich visuell oder durch optische, induktive oder ähnlich arbeitende Sensoren überwachen. In der Praxis bedeutet dies, daß während der Zeit der Zufuhr des Druckmittels das Laufrad 4 in Drehung versetzt wird und in dem Augenblick zum Stillstand kommt, wo die Preßmembran vollständig dem Filterkuchen anliegt, da dann kein weiteres Druckmittel mehr nachströmt.

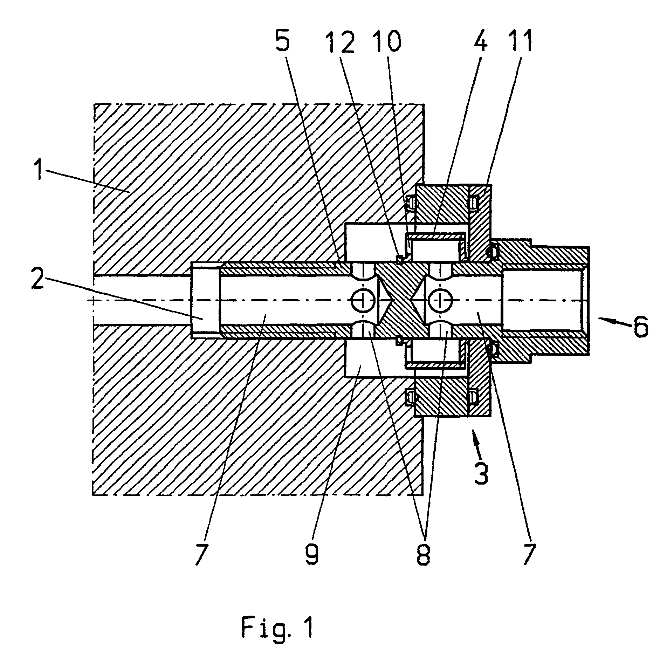

Im einzelnen ist der Strömungssensor 3 bei dem Ausführungsbeispiel nach Fig. 1 von einem Hülsenteil 5 gebildet, dessen axial eines Ende zum Anschluß an die Druckmittelbohrung 2 und dessen anderes Ende 6 zum Anschluß einer in der Zeichnung nicht dargestellten Druckmittelleitung ausgebildet ist. Beide Enden des Hülsenteils 5 weisen axial verlaufende Sacklochbohrungen 7 auf, an deren Enden jeweils vier radial verlaufende Querbohrungen 8 vorgesehen sind. Diese Querbohrungen 8 münden in eine Strömungskammer 9, innerhalb der sich das Laufrad 4 befindet, das auf der Außenmantelfläche des Hülsenteils 5 angeordnet ist. Das Laufrad 4 selbst ist dabei im wesentlichen hohlzylindrisch ausgebildet und mit Strömungsöffnungen 10 versehen, die sich schräg durch die Wandung erstrecken. Dabei ist das Laufrad 4 so angeordnet, daß es die Querbohrungen 8 eines der beiden Sacklochbohrungen 8 - hier die der Druckmittelleitung zugewandten - umschließt.

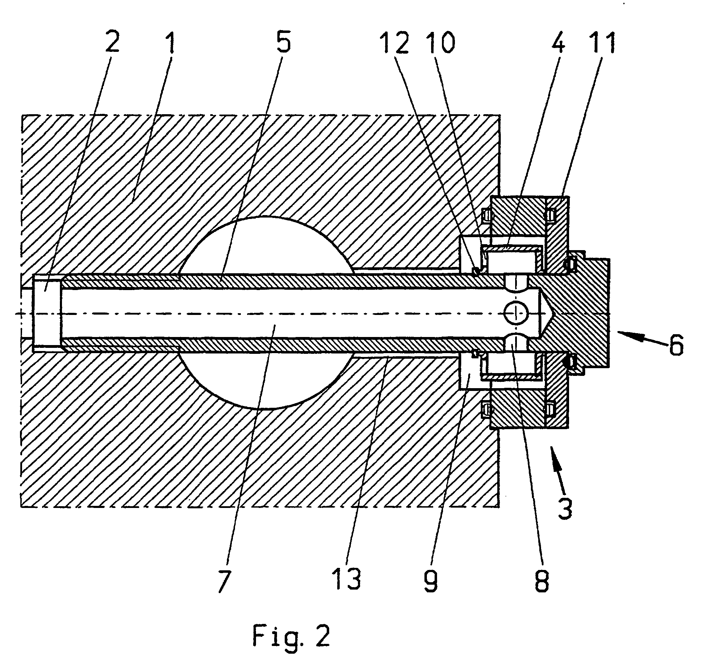

Bei dem Ausführungsbeispiel nach Fig. 2 ist der Strömungssensor 3 ebenfalls von einem Hülsenteil 5 gebildet, dessen axial eines Ende wieder um Anschluß an die Druckmittelbohrung 2 ausgebildet ist. Das andere Ende 6 dagegen ist geschlossen ausgebildet, wobei am geschlossenen Ende wiederum wenigstens radial verlaufende Querbohrungen vorgesehen sind, die die Strömungskammer 9 mit dem Hülseninnenraum verbindenden. Die Strömungskammer 9 steht über einen entlang der Außenmantelfläche des Hülsenteils 5 sich erstreckenden Ringkanal 13 mit einem senkrecht zum Filterelement bzw. Plattenrahmen 1 verlaufenden Druckmittelkanal in Verbindung. Auf der Außenmantelfläche des Hülsenteils 5 ist wieder das Laufrad 4 angeordnet, das in gleicher Weise im wesentlichen hohlzylindrisch ausgebildet ist. Es ist ebenfalls mit schräg sich durch die Wandung erstreckenden Strömungsöffnungen 10 versehen und umschließt die Querbohrungen 8.

In den in der Zeichnung dargestellten Ausführungsbeispielen sind die Strömungsöffnungen 10 in der der Filterkammer zugewandten Stirnfläche des Laufrades 4 angeordnet. Es besteht jedoch grundsätzlich auch die in der Zeichnung nicht dargestellte weitere Möglichkeit, diese Strömungsöffnungen 10 in der Mantelfläche des Laufrades 4 vorzusehen. Um das Laufrad 4 selbst in Rotation zu versetzen, müssen die Strömungsöffnungen 10 schräg verlaufen, wobei sich hierfür ein Winkel von etwa 30° bis 45° schräg zur Wandung des Laufrades 4 als günstig herausgestellt hat.

Die Strömungskammer 9 selbst ist von einem Ringflansch 11 gebildet, der sich einerseits gegen eine Ringschulter des Hülsenteils 5 und andererseits gegen die Stirnfläche des Rahmens 1 des Filterelementes dichtend abstützt. Dabei weist auch der Rahmen 1 des Filterelementes ein zur Druckmittelbohrung 2 konzentrisches Sackloch auf, das gemeinsam mit dem Ringflansch 11 die Strömungskammer 9 bildet. Der Durchmesser des Sackloches entspricht dabei dem Innendurchmesser des Ringflansches 11, so daß sich insgesamt eine bündige Innenmantelfläche für die Strömungskammer 9 ergibt.

Um das Laufrad beobachten zu können, ist die Mantelfläche des Ringflansches 11 transparent ausgebildet. Weiter ist es hierzu erforderlich, daß das Laufrad 4 an seiner Außenmantelfläche eine in der Zeichnung nicht wiedergegebene farbliche Markierung aufweist. Da die Drehzahl des Laufrades 4 relativ groß sein kann, ist die Ausbildung der farblichen Markierung in Form einer Schraubenlinie zweckmäßig, zumal hierdurch, also durch den sich visuell darstellenden Drehsinn, unmittelbar erkennbar ist, ob eine Befüllung oder Entleerung des Filterelementes mit Druckmittel erfolgt.

Das Laufrad 4 ist in axialer Richtung einerseits an dem Ringflansch 11 und andererseits an einem in einer Ringnut des Hülsenteils 5 angeordneten Sicherungsring 12 abgestützt. Da die gesamte Menge des Druckmittels unmittelbar das Laufrad 4 durchströmt, also ein Überströmen, wie es beispielsweise bei Schaufelrädern möglich ist, nicht auftreten kann, ist eine sehr präzise Überwachung möglich. Dies ist insbesondere dann von Bedeutung, wenn eine automatisierte Überwachung erfolgen soll, wie dies beispielsweise dann möglich ist, wenn das Laufrad **4** mit Metallstreifen besetzt ist, die eine induktive Erfassung der Drehbewegung ermöglichen. Dabei sind selbstverständlich grundsätzlich auch andere Erfassungsmöglichkeiten denkbar, die auf optischen oder anderen, die Erfassung einer Drehbewegung ermöglichenden Effekten beruhen.

## Patentansprüche

1. Leckagemelder für Filterelemente einer Filterpresse, bei der mehrere randseitig zusammengespannte, aus einer Stützwand mit einem umlaufenden Plattenrahmen (1) bestehende Filterelemente zwischen sich Filterkammern mit darin mündenden Einläufen für die zu filtrierende Suspension bilden und ein- oder beidseitig im Randbereich dicht mit dem Filterelement verbundene, durch ein Druckmittel in die Filterkammer vorbewegbare Preßmembranen tragen, wobei das Druckmittel über eine randseitig in dem Filterelement mündende Druckmittelbohrung zu- bzw. abgeführt wird, **gekennzeichnet durch** einen in die Anschlußbohrung einzusetzenden Strömungssensor mit einem Laufrad (4), dessen von dem zu- oder abströmenden Druckmittel verursachte Drehbewegung visuell oder **durch** optische, induktive oder dergleichen Sensoren überwacht werden kann.

2. Leckagemelder nach Anspruch 1, **dadurch gekennzeichnet, daß** der Strömungssensor (3) von einem Hülsenteil (5) gebildet ist, dessen axial eines Ende zum Anschluß an die Druckmittelbohrung (2) und dessen anderes Ende (6) zum Anschluß einer Druckmittelleitung ausgebildet ist, wobei beide Enden axial verlaufende Sacklochbohrungen (7) aufweisen, an deren Enden jeweils wenigstens eine radial verlaufende, in eine Strömungskammer (9) mündende Querbohrung (8) vorgesehen ist, und wobei auf der Außenmantelfläche des Hülsenteils (5) das Laufrad (4) angeordnet ist, das im wesentlichen hohlzylindrisch ausgebildet, dabei mit schräg sich durch die Wandung verlaufenden Strömungsöffnungen (10) versehen ist und die Querbohrungen (8) eines der beiden Sacklochbohrungen (7) umschließt.

3. Leckagemelder nach Anspruch 1, **dadurch gekennzeichnet, daß** der Strömungssensor (3) von einem Hülsenteil (5) gebildet ist, dessen axial eines Ende zum Anschluß an die Druckmittelbohrung (2) und dessen anderes Ende (6) geschlossen ausgebildet ist, wobei am geschlossenen Ende wenigstens eine radial verlaufende, die Strömungskammer (9) mit dem Hülseninnenraum verbindende Querbohrung (8) vorgesehen ist und die Strömungskammer (9) über einen entlang der Außenmantelfläche des Hülsenteils (5) sich erstreckenden Ringkanal (13) mit einem senkrecht zum Filterelement verlaufenden Druckmittelkanal in Verbindung steht, und wobei auf der Außenmantelfläche des Hülsenteils (5) das Laufrad (4) angeordnet ist, das im wesentlichen hohlzylindrisch ausgebildet, dabei mit schräg sich durch die Wandung erstreckenden Strömungsöffnungen (10) versehen ist und die Querbohrungen (8) umschließt.

4. Leckagemelder nach Anspruch 2 oder 3, **dadurch gekennzeichnet, daß** jeweils vier Querbohrungen (8) im Hülsenteil (5) vorgesehen sind.

5. Leckagemelder nach einem der Ansprüche 2 bis 4, **dadurch gekennzeichnet, daß** die Strömungsöffnungen (10) in der der Filterkammer zugewandten Stirnfläche des Laufrades (4) vorgesehen sind.

6. Leckagemelder nach einem der Ansprüche 2 bis 4, **dadurch gekennzeichnet, daß** die Strömungsöffnungen (10) in der Mantelfläche des Laufrades (4) vorgesehen sind.

7. Leckagemelder nach einem der Ansprüche 2 bis 6, **dadurch gekennzeichnet, daß** die Strömungsöffnungen (10) sich unter einem Winkel von etwa 30° bis 45° zur Wandung des Laufrades (4) erstrecken.

8. Leckagemelder nach einem der Ansprüche 2 bis 7, **dadurch gekennzeichnet, daß** die Strömungskammer (9) von einem Ringflansch (11) gebildet ist, der sich einerseits gegen eine Ringschulter des Hülsenteils (5) und andererseits gegen die Stirnfläche des Rahmens (1) des Filterelements dichtend abstützt.

9. Leckagemelder nach Anspruch 8, **dadurch gekennzeichnet, daß** der Rahmen (1) des Filterelements ein zur Druckmittelbohrung (2) konzentrisches Sackloch aufweist, das gemeinsam mit dem Ringflansch (11) die Strömungskammer (9) bildet.

10. Leckagemelder nach Anspruch 8 oder 9, **dadurch gekennzeichnet, daß** die Mantelfläche des Ringflansches (11) transparent ausgebildet ist und das Laufrad (4) an seiner Außenmantelfläche eine farbliche Markierung aufweist.

11. Leckagemelder nach Anspruch 10, **dadurch gekennzeichnet, daß** die farbliche Markierung die Form einer Schraubenlinie aufweist.

12. Leckagemelder nach einem der Ansprüche 8 bis 11, **dadurch gekennzeichnet, daß** das Laufrad (4) in axialer Richtung von dem Ringflansch einerseits und einem in einer Ringnut des Hülsenteils (5) angeordneten Sicherungsring (12) andererseits abgestützt wird.

13. Leckagemelder nach einem der Ansprüche 1 bis 12, **dadurch gekennzeichnet, daß** das Laufrad (4) mit Metallstreifen zur induktiven Erfassung der Drehbewegung besetzt ist.

## Claims

1. Leak alarm for filter elements of a filter press, in which several filter elements which are braced together at the edge and which comprise a support wall with a plate frame (1) running all round, form between them filter chambers with inlets opening into them for the suspension that is to be filtered, and bear pressure membranes on one or both sides which are tightly connected at the edge area to the filter element, and can be moved forward into the filter chamber by means of a pressure medium, wherein the pressure medium is supplied and discharged via a drilled hole for the pressure medium that leads, at the edge, into the filter element, **characterised by** a flow sensor, to be placed in the connecting drilled hole, with a running wheel (4) whose rotational movement, which is caused by the pressure medium flowing in or out, can be monitored visually or by means of optical, inductive or similar sensors.

2. Leak alarm in accordance with claim 1,
**characterised in that**
the flow sensor (3) is formed by a sleeve part (5) whose one axial end is designed to connect to the drilled hole (2) for the pressure medium and whose other end (6) is designed to connect to a pressure medium conduit, wherein both ends have blind drilled holes (7) which run axially, and which at their ends respectively have at least one cross hole (8) which runs radially and leads into a flow chamber (9), and wherein arranged on the outer casing surface of the sleeve part (5) is the running wheel (4) which is designed essentially as a hollow cylinder and is equipped with flow openings (10) that run obliquely through the walling and encompasses the cross holes (8) of one of the two blind drilled holes (7).

3. Leak alarm in accordance with claim 1,
**characterised in that**
the flow sensor (3) is formed by a sleeve part (5) whose one axial end is designed to connect to the drilled hole (2) for the pressure medium and whose other end (6) is designed to be closed, wherein provided at the closed end there is at least one cross hole (8) which runs radially and connects the flow chamber (9) to the interior of the sleeve, and the flow chamber (9) is connected, via a ring channel (13) that extends along the outer casing surface of the sleeve part (5), to a pressure medium channel that runs perpendicular to the filter element, and wherein arranged on the outer casing surface of the sleeve part (5) is the running wheel (4) which is designed essentially as a hollow cylinder and is equipped with flow openings (10) that extend obliquely through the walling and encompasses the cross holes (8).

4. Leak alarm in accordance with claim 2 or 3, **characterised in that** in each case four cross holes (8) are provided in the sleeve part (5).

5. Leak alarm in accordance with one of the claims 2 to 4, **characterised in that** the flow openings (10) are provided **in that** frontal face of the running wheel (4) which faces the filter chamber.

6. Leak alarm in accordance with one of the claims 2 to 4, **characterised in that** the flow openings (10) are provided in the casing surface of the running wheel (4).

7. Leak alarm in accordance with one of the claims 2 to 6, **characterised in that** the flow openings (10) extend at an angle of around 30° to 45° to the walling of the running wheel (4).

8. Leak alarm in accordance with one of the claims 2 to 7, **characterised in that** the flow chamber (9) is formed by a ring flange (11) which rests on the one hand against a ring shoulder of the sleeve part (5) and on the other hand against the frontal face of the frame (1) of the filter element, effecting a seal.

9. Leak alarm in accordance with claim 8, **characterised in that** the frame (1) of the filter element has a blind hole which is concentric to the drilled hole (2) for the pressure medium, and which together with the ring flange (11) forms the flow chamber (9).

10. Leak alarm in accordance with claim 8 or 9, **characterised in that** the casing surface of the ring flange (11) is designed to be transparent and the running wheel (4) on its outer casing surface has a coloured marking.

11. Leak alarm in accordance with claim 10, **characterised in that** the coloured marking is in the form of a helical line.

12. Leak alarm in accordance with one of the claims 8 to 11, **characterised in that** the running wheel (4) is supported in the axial direction by the ring flange on the one hand and a securing ring (12) arranged in a ring groove of the sleeve part (5) on the other hand.

13. Leak alarm in accordance with one of the claims 1 to 12, **characterised in that** the running wheel (4) is fitted with metal strips for the inductive detection of the rotational movement.

## Revendications

1. Détecteur de fuite pour des éléments de filtre d'un filtre presse, dans lequel plusieurs éléments de filtre, constitués d'une paroi d'appui avec un cadre de plaque (1) périphérique et assemblés au niveau de leurs bords, définissent entre eux des chambres de filtre avec des entrées qui débouchent dans celles-ci pour la suspension à filtrer, et portent d'un côté ou des deux côtés une membrane (6), qui est liée de manière étanche au niveau de son bord à l'élément de filtre et peut être déplacée à l'intérieur de la chambre de filtre à l'aide d'un fluide de pression, le fluide de pression étant introduit et évacué au travers d'un trou de fluide de pression débouchant côté bord dans l'élément de filtre, **caractérisé par** un détecteur d'écoulement monté dans le trou de raccordement, avec un rotor (4) dont la rotation causée par le fluide de pression entrant ou sortant peut être surveillée visuellement ou par des capteurs optiques, inductifs ou similaires.

2. Détecteur de fuite selon la revendication 1, **caractérisé en ce que** le détecteur d'écoulement (3) est formé d'une partie manchon (5) dont l'une des extrémités axiales est agencée pour sa connexion au trou de fluide de pression (2) et l'autre extrémité (6) est agencée pour la connexion à une conduite de fluide de pression, les deux extrémités comportant des trous non débouchants (7) axiaux aux extrémités desquels est prévu au moins un perçage transversal radial qui débouche dans une chambre d'écoulement (9), le rotor (4) étant disposé sur la surface extérieure de la partie manchon (5), lequel rotor est conformé essentiellement en cylindre creux, est pourvu d'orifices d'écoulement (10) qui traversent avec une inclinaison la paroi, et recouvre les perçages transversaux de l'un des deux trous non débouchants (7)

3. Détecteur de fuite selon la revendication 1, **caractérisé en ce que** le détecteur d'écoulement (3) est formé d'une partie manchon (5) dont l'une des extrémités axiales est agencée pour la connexion au trou de fluide de pression (2) et dont l'autre extrémité (6) est fermée, au moins un perçage transversal (8) radial qui relie la chambre d'écoulement (9) à l'espace intérieur de la partie manchon étant prévu à l'extrémité fermée, la chambre d'écoulement (9) communiquant avec un canal à fluide de pression par l'intermédiaire d'un canal annulaire (13) qui s'étend le long de la paroi extérieure de la partie manchon (5), perpendiculairement à l'élément de filtre et le rotor (4) étant disposé sur la paroi extérieure de la partie manchon (5), lequel rotor est conformé essentiellement en cylindre creux, est pourvu d'orifices d'écoulement (10) qui s'étendent avec une inclinaison à travers la paroi et recouvre les perçages transversaux (8).

4. Détecteur de fuites selon la revendication 2 ou 3, **caractérisé en ce qu'**il est prévu chaque fois quatre perçages transversaux (8) dans la partie manchon (5).

5. Détecteur de fuites selon une des revendications 2 à 4, **caractérisé en ce que** les orifices d'écoulement (10) sont prévus dans la surface frontale du rotor (4) tournée vers la chambre de filtre.

6. Détecteur de fuites selon une des revendications 2 à 4, **caractérisé en ce que** les orifices d'écoulement (10) sont prévus dans la surface extérieure du rotor (4).

7. Détecteur de fuites selon une des revendications 2 à 6, **caractérisé en ce que** les orifices d'écoulement (10) s'étendent sous un angle d'environ 30° à 45° par rapport à la paroi du rotor (4).

8. Détecteur de fuites selon une des revendications 2 à 7, **caractérisé en ce que** la chambre d'écoulement (9) est formée par une bride annulaire (11) qui appliquée de manière étanche d'un côté contre un épaulement annulaire de la partie manchon (5) et de l'autre côté contre la face frontale du cadre (1) de l'élément de filtre.

9. Détecteur de fuites selon la revendication 8, **caractérisé en ce que** le cadre (1) de l'élément de filtre présente un trou non débouchant concentrique avec le trou de fluide de pression (2) qui avec la bride annulaire (11) forme la chambre d'écoulement (9).

10. Détecteur de fuites selon la revendication 8 ou 9, **caractérisé en ce que** la surface extérieure de la bride annulaire (11) est transparente et que le rotor (4) porte une marque colorée sur sa surface extérieure.

11. Détecteur de fuites selon la revendication 10, **caractérisé en ce que** la marque colorée a la forme d'une hélice.

12. Détecteur de fuites selon une des revendications 8 à 11, **caractérisé en ce que** le rotor (4), dans la direction axiale, est supporté par la bride annulaire d'une part et par un anneau élastique (12) monté dans une gorge annulaire de la partie manchon (5) d'autre part.

13. Détecteur de fuites selon une des revendications 1 à 12, **caractérisé en ce que** le rotor (4) est équipé de bandes de métal pour la détection par induction de la rotation.
